# NEUE EUROPÄISCHE PATENTSCHRIFT

(11) **EP 2 891 775 B2**
(45) Veröffentlichungstag und Bekanntmachung des Hinweises auf die Entscheidung über den Einspruch: **24.06.2020**
(45) Hinweis auf die Patenterteilung: 19.10.2016
(21) Anmeldenummer: 14179762.1
(22) Anmeldetag: 04.08.2014
(51) Int. Cl.: F01N 1/06, F01N 3/00

(54) **Abgasanlage mit einem System zur Abfuhr von Kondensat**
Exhaust system having system for removing condensate
Installation de gaz d'échappement dotée d'un système d'évacuation du condensat

(30) Priorität: 30.08.2013 DE 102013109462
(43) Veröffentlichungstag der Anmeldung: 08.07.2015
(73) Patentinhaber: Eberspächer Exhaust Technology GmbH & Co. KG, 66539 Neunkirchen (DE)
(72) Erfinder: Wink, Peter, 73035 Göppingen (DE); Pommerer, Michael, 73066 Uhingen (DE)
(74) Vertreter: Diehl & Partner GbR

(56) Entgegenhaltungen:
- WO-A1-2011/095412
- DE-B1- 2 914 159
- GB-A- 2 134 979

## Beschreibung

Die Erfindung betrifft eine Abgasanlage für ein verbrennungsmotorisch betriebenes Fahrzeug mit einem System zur Abfuhr von Kondensat.

Abgasanlagen für Verbrennungskraftmaschinen sind herkömmlich aus passiven Komponenten aufgebaut, die in allen Betriebssituationen insgesamt von Abgas durchströmt werden und zusammen die Abgasanlage bilden. Bei diesen Komponenten kann es sich neben Leitungsstücken beispielsweise um einen Turbolader, einen Katalysator oder einen Schalldämpfer handeln.

In jüngerer Zeit wurde begonnen, Abgasanlagen um Systeme zur aktiven Beeinflussung von in der Abgasanlage geführtem, auf den Betrieb einer Verbrennungskraftmaschine zurückzuführenden Abgasgeräusch zu ergänzen. Derartige Systeme prägen dem in der Abgasanlage geführten, von der Verbrennungskraftmaschine erzeugten Abgasgeräusch eine charakteristische Geräuschentwicklung auf, welche zum Image eines jeweiligen Herstellers passen und Kunden ansprechen soll. Hierfür werden den in der Abgasanlage geführten Schallwellen, die auf den Betrieb der Verbrennungskraftmaschine zurückzuführen sind (Abgasgeräuschen), im Inneren der Abgasanlage künstlich erzeugte Schallwellen überlagert.

Dies erfolgt dadurch, dass ein Schallerzeuger vorgesehen ist, der mit der Abgasanlage in Fluidverbindung steht und so Schall in das Innere der Abgasanlage einstrahlt. Dieser künstlich erzeugte Schall und der von der Verbrennungskraftmaschine erzeugte Schall überlagern sich und treten gemeinsam durch ein Endrohr der Abgasanlage aus. Derartige Systeme können auch zur Schalldämpfung eingesetzt werden. Zum Erzielen einer vollständigen destruktiven Interferenz der Schallwellen des in der Abgasanlage geführten Abgasgeräuschs und des vom Schallerzeuger erzeugten Schalls müssen die vom Lautsprecher herrührenden Schallwellen nach Amplitude und Frequenz den in der Abgasanlage geführten Schallwellen entsprechen, relativ zu diesen jedoch eine Phasenverschiebung von 180 Grad aufweisen. Entsprechen sich die in der Abgasanlage geführten Schallwellen des Abgasgeräuschs und die vom Lautsprecher erzeugten Schallwellen zwar in der Frequenz, und weisen sie relativ zueinander eine Phasenverschiebung von 180 Grad auf, entsprechen sich die Schallwellen aber nicht in der Amplitude, kommt es nur zu einer Abschwächung der in der Abgasanlage geführten Schallwellen des Abgasgeräuschs.

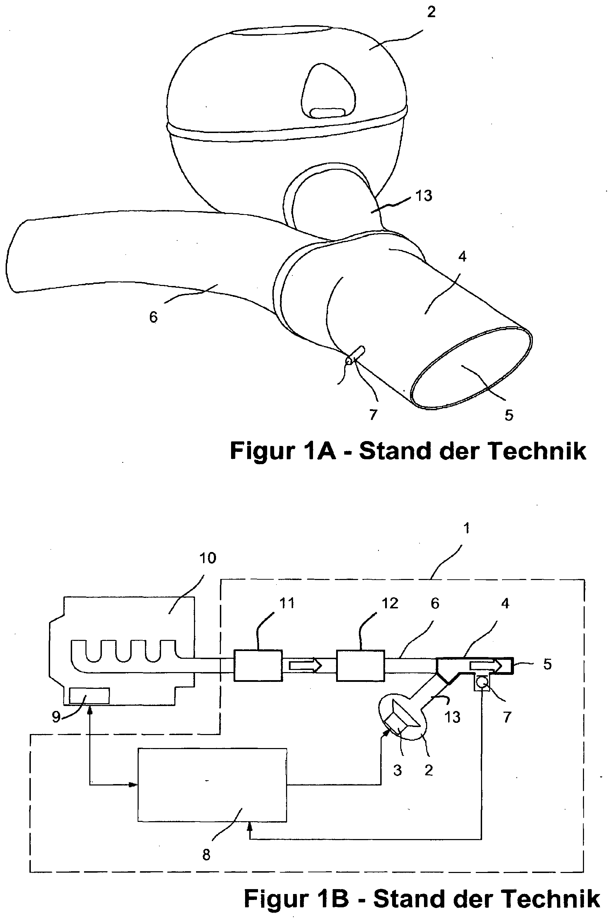

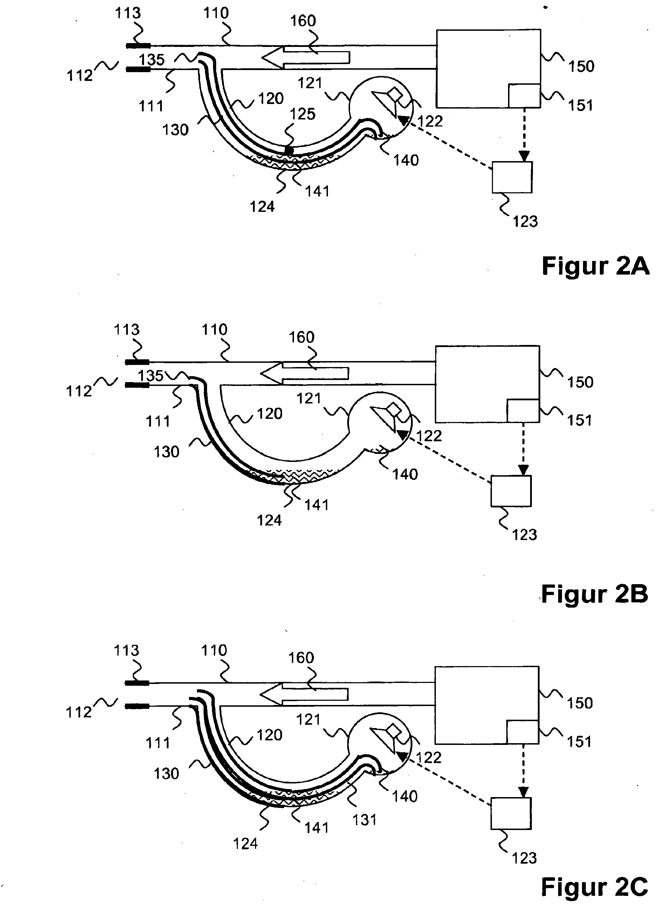

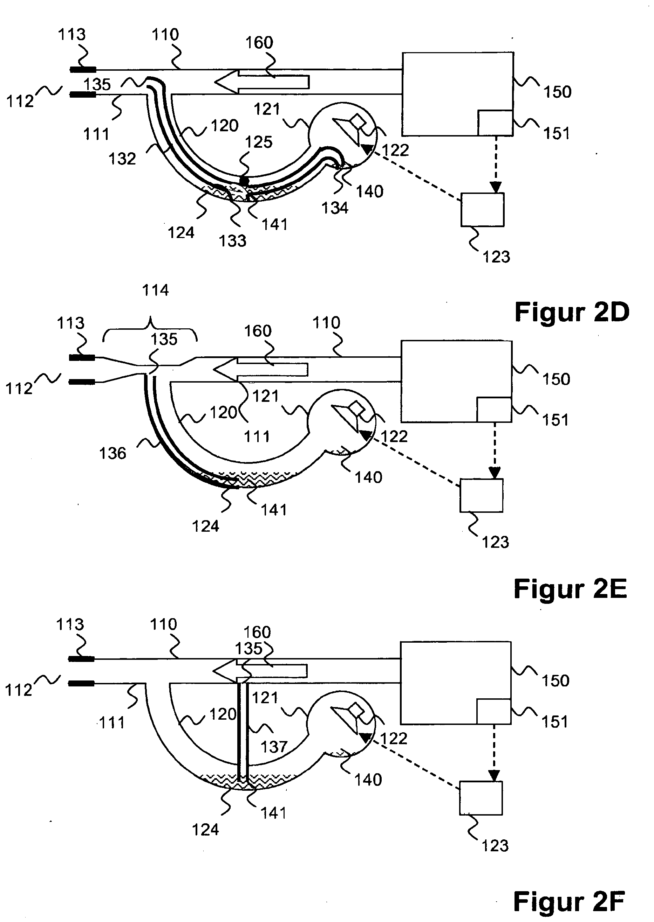

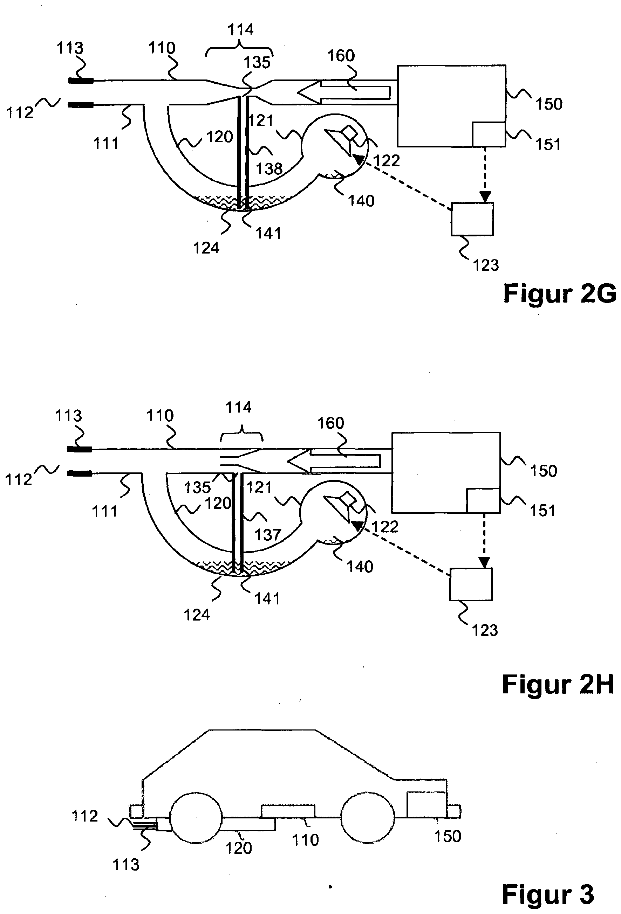

Eine derartige Abgasanlage aus dem Stand der Technik wird nachfolgend unter Bezugnahme auf die Figuren 1A und 1B beschrieben:
Eine Abgasanlage mit einem Schall-System 1 weist einen Schallerzeuger 2 in Form eines schallisolierten Gehäuses auf, welches einen Lautsprecher 3 enthält und im Bereich eines Endrohrs 4 über eine Schallleitung 13 an eine Abgasanlage 6 angebunden ist. Wie aus Figur 1A ersichtlich, ist ein Boden des Schallerzeugers 2 und ein Boden der Schallleitung 13 oberhalb eines Bodens des Endrohres 4 angeordnet. Das Endrohr 4 weist eine Mündung 5 auf, welche in der Abgasanlage 4 geführtes Abgas nach außen abgibt. An dem Endrohr 4 ist ein Fehlermikrofon 7 in Form eines Drucksensors vorgesehen. Das Fehlermikrofon 7 misst Druckschwankungen und damit Schall im Inneren des Endrohrs 4 in einem Abschnitt stromabwärts eines Bereichs, in dem die Schallleitung 13 in die Abgasanlage 6 mündet und damit die fluide Anbindung zwischen Abgasanlage 6 und Schallerzeuger 2 bereitgestellt wird. Dabei ist der Begriff "stromabwärts" auf die Strömungsrichtung des Abgases bezogen. Die Strömungsrichtung des Abgases ist in Figur 2 durch Pfeile gekennzeichnet. Zwischen dem Bereich der fluiden Anbindung zwischen Abgasanlage 6 und Schallerzeuger 2 und der Verbrennungskraftmaschine 10 ist weiter ein Katalysator 11 und ein Schalldämpfer 12 vorgesehen. Der Lautsprecher 3 und das Fehlermikrofon 7 sind elektrisch mit einer Steuerung 8 verbunden. Weiter ist die Steuerung 8 über einen CAN-Bus mit einer Motorsteuerung 9 eines Verbrennungsmotors 10 verbunden. Anhand von durch das Fehlermikrofon 7 gemessenem Schall und von über den CAN-Bus empfangenen Betriebsparametern des Verbrennungsmotors 10 berechnet die Steuerung 8 für den Lautsprecher 3 ein Steuersignal, welches bei Überlagerung mit dem im Inneren der Abgasanlage 6 geführten Schall ein angestrebtes Gesamtgeräusch erzeugt, und gibt dieses an den Lautsprecher 3 aus. Dabei kann die Steuerung beispielsweise einen *Filtered-x Least mean squares (FxLMS)* Algorithmus verwenden, und versuchen, ein mittels des Fehlermikrofons gemessenes Fehlersignal durch Ausgabe von Schall über den Lautsprecher auf Null (im Falle der Schallauslöschung) oder einen vorgegebenen Schwellwert (im Falle der Schallbeeinflussung) zu regeln.

Bei herkömmlichen Abgasanlagen ist es nachteilig, dass sich im Schallerzeuger, der Schallleitung, oder anderen Komponenten der Abgasanlage wie beispielsweise dem Katalysator oder dem Schalldämpfer, korrosives Kondensat bilden und sammeln kann. Dabei sind der Schallerzeuger und die Schallleitung für die Bildung von Kondensat besonders gefährdet, da diese in der Regel kälter als die von heißem Abgas durchströmten Komponenten der Abgasanlage sind, und die Strömungsgeschwindigkeit des Abgases in der Schallleitung und dem Schallerzeuger nahezu null ist.

Wenn sich aggressives Kondensat in dem Schallerzeuger, oder einer anderen Komponente der Abgasanlage sammelt, besteht die Gefahr einer Zerstörung des Schallerzeugers und/oder der Schallleitung und/oder der Komponente von innen nach außen. Zur Lösung dieses Problems ist es bekannt, kritische Komponenten wie beispielsweise den Schallerzeuger und die Schallleitung gegenüber der Abgasanlage erhöht anzuordnen, damit das Kondensat ablaufen kann. Dies ist auch im Beispiel aus Figur 1A gezeigt. Dies schränkt die Möglichkeit der Anordnung des Schallerzeugers bezogen auf die Abgasanlage jedoch erheblich ein.

Zusätzlich ist es bekannt, an der Unterseite von Komponenten der Abgasanlagen Öffnungen vorzusehen, durch die Kondensat ablaufen kann. Derartige Öffnungen sind jedoch nur in sehr eingeschränktem Maße zulässig, da durch die Öffnung neben Kondensat auch unbehandeltes Abgas entweichen kann. Zudem sind die Ränder derartiger Öffnungen selber besonders anfällig für Korrosion.

Aus den Dokumenten GB 2 134 979 A und DE 29 14 159 B1 sind jeweils Vorrichtungen mit der Kombination der Merkmale des Oberbegriffs des unabhängigen Anspruchs 1 bekannt.

Es ist Aufgabe der vorliegenden Erfindung, eine Abgasanlage für verbrennungsmotorisch betriebene Fahrzeuge mit einem System zur Abfuhr von Kondensat bereitzustellen, welche eine niedrige Komplexität und große Robustheit aufweist und bei niedrigen Kosten bereitgestellt werden kann.

Die vorstehende Aufgabe wird durch die Kombination der Merkmale von Anspruch 1 gelöst. Bevorzugte Weiterbildungen finden sich in den Unteransprüchen.

Ausführungsformen einer Abgasanlage für ein verbrennungsmotorisch betriebenes Fahrzeug mit einem System zur Abfuhr von Kondensat weisen einen ersten mit Abgas beaufschlagbaren Leitungsabschnitt, einen zweiten mit Abgas beaufschlagbaren Leitungsabschnitt und eine Saugleitung auf. Dabei bedeutet "mit Abgas beaufschlagbar", dass im Betrieb Abgas an der Innenwand des Leitungsabschnitts anliegt; es ist jedoch nicht erforderlich, dass das Abgas strömt. Die Saugleitung weist eine Öffnung auf, die ausgebildet ist, von in dem ersten Leitungsabschnitt strömendem Abgas überströmt zu werden. Dies bedeutet, dass die Öffnung der Saugleitung im ersten Leitungsabschnitt angeordnet ist, und im ersten Leitungsabschnitt geführtes Abgas über diese Öffnung hinwegströmt.

Durch das an der Öffnung der Saugleitung vorbeiströmende Abgas wird in der Saugleitung ein Unterdruck erzeugt, der es erlaubt, am Boden des zweiten Leitungsabschnitts gesammeltes Kondensat über die Saugleitung in den ersten Leitungsabschnitt zu fördern und zusammen mit dem heißen Abgas abzuführen. Auf diese Weise ist es unter Verwendung rein passiver Komponenten und unter Verzicht auf eine Abflussöffnung in dem zweiten Leitungsabschnitt möglich, Kondensat aus tiefliegenden Leitungsabschnitten in höherliegende Leitungsabschnitte zu fördern.

Gemäß einer Ausführungsform wird das aus dem zweiten Leitungsabschnitt in den ersten Leitungsabschnitt geförderte Kondensat aufgrund einer hohen Temperatur des in dem ersten Leitungsabschnitt geführten Abgases in dem ersten Leitungsabschnitt verdampft und gasförmig zusammen mit dem Abgas ausgegeben.

Erfindungsgemäß weist die Saugleitung genau zwei sich in Längserstreckung der Saugleitung gegenüberliegende Öffnungen auf. Dabei ist die erste Öffnung der Saugleitung in dem ersten Leitungsabschnitt angeordnete, um von Abgas überströmt zu werden, und ist die zweite Öffnung der Saugleitung im Bereich des Bodens des zweiten Leitungsabschnitts angeordnet.

Gemäß Ausführungsformen weist die Saugleitung eine Längserstreckung auf, die wenigstens das 5-fache und insbesondere wenigstens das 10-fache und weiter insbesondere wenigstens das 20-fache eines größten Durchmessers der Saugleitung an der im ersten Leitungsabschnitt angeordneten Öffnung beträgt.

Gemäß Ausführungsformen weist die Saugleitung eine Längserstreckung auf, die wenigstens das 3-fache und insbesondere wenigstens das 6,5-fache und weiter insbesondere wenigstens das 13-fache der Quadratwurzel einer Querschnittsfläche der Saugleitung an der im ersten Leitungsabschnitt angeordneten Öffnung beträgt.

Gemäß einer Ausführungsform weist der erste Leitungsabschnitt an der Stelle, an welcher die Saugleitung in den ersten Leitungsabschnitt mündet, einen Querschnitt auf, der gegenüber einem Querschnitt stromaufwärts der Stelle, an welcher die Saugleitung in den ersten Leitungsabschnitt mündet, verkleinert ist. Infolge dieser Querschnittsveränderung tritt in dem ersten Leitungsabschnitt an der Stelle, an welcher die Saugleitung in den ersten Leitungsabschnitt mündet, ein Unterdruck auf. Dieser Wirkungsmechanismus entspricht dem einer Venturi-Düse. Dabei kann die Verkleinerung des Querschnitts des ersten Leitungsabschnitts durch separate Maßnahmen oder alleine durch die Anordnung der Saugleitung oder eines Abschnitts der Saugleitung im Inneren des ersten Leitungsabschnitts hervorgerufen werden.

Gemäß einer Ausführungsform sind die Begriffe "stromaufwärts" und "stromabwärts" bezogen auf eine Strömungsrichtung von Abgas im ersten Leitungsabschnitt definiert. Somit bezeichnet stromabwärts eine Richtung in Strömungsrichtung des Abgases und stromaufwärts eine Richtung entgegen der Strömungsrichtung des Abgases.

Gemäß einer Ausführungsform ist dann der Querschnitt des ersten Leitungsabschnitts an der Stelle, an welcher die Saugleitung in den ersten Leitungsabschnitt mündet, um wenigstens 5% und insbesondere wenigstens 10% und weiter insbesondere um wenigstens 20 % gegenüber dem Querschnitt des ersten Leitungsabschnitts stromaufwärts der Stelle, an welcher die Saugleitung in den ersten Leitungsabschnitt mündet, verkleinert.

Gemäß einer Ausführungsform ist dann die Stelle, an welcher die Saugleitung in den ersten Leitungsabschnitt mündet, um höchstens das zweifache der Wurzel aus der Querschnittsfläche und insbesondere um die Wurzel aus der Querschnittsfläche und weiter insbesondere um höchstens die halbe Wurzel aus der Querschnittsfläche des ersten Leitungsabschnitts an der Stelle, an welcher die Saugleitung in den ersten Leitungsabschnitt mündet, entgegen der Strömungsrichtung des Abgases von der Stelle des ersten Leitungsabschnitts beabstandet, an welcher der erste Leitungsabschnitt einen größeren Querschnitt als an der Stelle aufweist, an welcher die Saugleitung in den ersten Leitungsabschnitt mündet

Gemäß einer Ausführungsform weist der erste Leitungsabschnitt an der Stelle, an welcher die Saugleitung in den ersten Leitungsabschnitt mündet, einen größten Durchmesser auf, der gegenüber einem größten Durchmesser stromaufwärts der Stelle, an welcher die Saugleitung in den ersten Leitungsabschnitt mündet, verkleinert ist. Infolge dieser Veränderung des größten Durchmessers tritt in dem ersten Leitungsabschnitt an der Stelle, an welcher die Saugleitung in den ersten Leitungsabschnitt mündet, ein Unterdruck auf. Dieser Wirkungsmechanismus entspricht dem einer Venturi-Düse. Dabei kann die Verkleinerung des größten Durchmessers des ersten Leitungsabschnitts durch separate Maßnahmen oder alleine durch die Anordnung der Saugleitung oder eines Abschnitts/Teils der Saugleitung im Inneren des ersten Leitungsabschnitts hervorgerufen werden.

Gemäß einer Ausführungsform ist dann der größte Durchmesser des ersten Leitungsabschnitts an der Stelle, an welcher die Saugleitung in den ersten Leitungsabschnitt mündet, um wenigstens 3 % und insbesondere wenigstens 7 % und weiter insbesondere um wenigstens 14% gegenüber dem größten Durchmesser stromaufwärts der Stelle, an welcher die Saugleitung in den ersten Leitungsabschnitt mündet, verkleinert.

Gemäß einer Ausführungsform ist dann die Stelle, an welcher die Saugleitung in den ersten Leitungsabschnitt mündet, um höchstens den dreifachen größten Durchmesser und insbesondere um höchstens den 1,5-fachen größten Durchmesser und weiter insbesondere um höchstens den 0,75-fachen größten Durchmesser des ersten Leitungsabschnitts an der Stelle, an welcher die Saugleitung in den ersten Leitungsabschnitt mündet, entgegen der Strömungsrichtung des Abgases von der Stelle des ersten Leitungsabschnitts beabstandet, an welcher der erste Leitungsabschnitt einen größeren Querschnitt als an der Stelle aufweist, an welcher die Saugleitung in den ersten Leitungsabschnitt mündet.

Gemäß einer Ausführungsform weist die Saugleitung einen Querschnitt auf, der höchstens 50 % des Querschnitts und insbesondere höchstens 30 % des Querschnitts und weiter insbesondere höchstens 10 % des Querschnitts des ersten und/oder zweiten Leitungsabschnitts beträgt.

Gemäß einer Ausführungsform weist die Saugleitung einen größten Durchmesser auf, der höchstens 33 % des Durchmessers und insbesondere höchstens 20 % des größten Durchmessers und weiter insbesondere höchstens 7 % des größten Durchmessers des ersten und/oder zweiten Leitungsabschnitts beträgt.

Erfindungsgemäß weist der zweite Leitungsabschnitt einen Schallerzeuger auf, der zum Empfang von Steuersignalen mit einer Steuerung verbunden und zum Erzeugen von Schall in dem zweiten Leitungsabschnitt ausgebildet ist. Da der Leitungsabschnitt, über welchen der eine Schallerzeuger an die Abgasanlage angebunden ist, üblicherweise nur von stehendem Abgas beaufschlagt ist, ist dieser Leitungsabschnitt üblicherweise kälter als andere Leitungsabschnitte und daher besonders anfällig gegen Korrosion.

Erfindungsgemäß begrenzt dieser zweite Leitungsabschnitt ein konstantes Volumen.

Dabei werden im Hinblick auf das von dem zweiten Leitungsabschnitt begrenzte konstante Volumen periodische Volumenschwankungen ignoriert. Derartige periodische Volumenschwankungen können beispielsweise infolge einer Verlagerung einer Membran eines Lautsprechers auftreten, welcher Lautsprecher im wenigstens einen Schallerzeuger des zweiten Leitungsabschnitts angeordnet ist.

Erfindungsgemäß ist der Boden des zweiten Leitungsabschnitts unterhalb eines Bodens des ersten Leitungsabschnitts angeordnet.

Erfindungsgemäß weist der erste Leitungsabschnitt ein erstes Ende auf, das mit einer Verbrennungskraftmaschine in Fluidverbindung bringbar ist, und ein zweites Ende auf, das mit einer Abgasmündung in Fluidverbindung bringbar ist.

Gemäß einer Ausführungsform ist ein Druck des den ersten Leitungsabschnitt beaufschlagenden Abgases gleich groß oder größer einem Druck des den zweiten Leitungsabschnitt beaufschlagenden Abgases.

Erfindungsgemäß mündet der zweite Leitungsabschnitt in den ersten Leitungsabschnitt.

Gemäß einer Ausführungsform ist das Kondensat eine Flüssigkeit.

Ausführungsformen eines Kraftfahrzeugs weisen eine Verbrennungskraftmaschine mit einer Motorsteuerung und eine Abgasanlage wie vorstehend beschrieben auf. Dabei steht ein Ende des ersten Leitungsabschnitts mit der Verbrennungskraftmaschine in Fluidverbindung, und steht das andere Ende des ersten Leitungsabschnitts mit einer Abgasmündung in Fluidverbindung. Weiter ist bei Betrieb der Verbrennungskraftmaschine ein von dem Abgas der Verbrennungskraftmaschine hervorgerufener Innendruck in dem ersten Leitungsabschnitt an der Stelle, an welcher die Saugleitung in den ersten Leitungsabschnitt mündet, gegenüber einem Innendruck stromaufwärts der Stelle, an welcher die Saugleitung in den ersten Leitungsabschnitt mündet, verkleinert.

In diesem Zusammenhang wird darauf hingewiesen, dass die in dieser Beschreibung und den Ansprüchen zur Aufzählung von Merkmalen verwendeten Begriffe "umfassen", "aufweisen", "beinhalten", "enthalten" und "mit", sowie deren grammatikalische Abwandlungen, generell als nichtabschließende Aufzählung von Merkmalen, wie z. B. Verfahrensschritten, Einrichtungen, Bereichen, Größen und dergleichen aufzufassen sind, und in keiner Weise das Vorhandensein anderer oder zusätzlicher Merkmale oder Gruppierungen von anderen oder zusätzlichen Merkmalen ausschließen.

Weitere Merkmale der Erfindung ergeben sich aus der nachfolgenden Beschreibung von Ausführungsbeispielen in Verbindung mit den Ansprüchen sowie den Figuren. In den Figuren werden gleiche bzw. ähnliche Elemente mit gleichen bzw. ähnlichen Bezugszeichen bezeichnet. Es wird darauf hingewiesen, dass die Erfindung nicht auf die Ausführungsformen der beschriebenen Ausführungsbeispiele beschränkt, sondern durch den Umfang der beiliegenden Patentansprüche bestimmt ist. Insbesondere können die einzelnen Merkmale bei erfindungsgemäßen Ausführungsformen in anderer Anzahl und Kombination als bei den untenstehend angeführten Beispielen verwirklicht sein. Bei der nachfolgenden Erläuterung eines Ausführungsbeispiels der Erfindung wird auf die beiliegenden Figuren Bezug genommen, von denen
- Figur 1A: schematisch eine perspektivische Ansicht eines Abschnitts einer Abgasanlage zeigt, welcher einen Schallerzeuger eines Systems zur Beeinflussung von in einer Abgasanlage eines Fahrzeugs geführten Abgasgeräuschen einer Verbrennungskraftmaschine aufweist,
- Figur 1B: schematisch ein Blockdiagramm eines Systems zur Beeinflussung von in einer Abgasanlage eines Fahrzeugs geführten Abgasgeräuschen einer Verbrennungskraftmaschine im Zusammenwirken mit einer Abgasanlage einer Verbrennungskraftmaschine nach dem Stand der Technik zeigt, wobei der Schallerzeuger aus Figur 1A verwendet wird,
- Figuren 2A, 2B, 2C, 2D, 2E, 2F, 2G, 2H: schematisch Blockdiagramme eines Systems zur Beeinflussung von in einer Abgasanlage eines Fahrzeugs geführten Abgasgeräuschen einer Verbrennungskraftmaschine zeigt, wobei nur Figur 2B erfindungsgemäß ist; und
- Figur 3: schematisch ein Kraftfahrzeug zeigt, welches eine Abgasanlage mit einem System zur Beeinflussung von in einer Abgasanlage eines Fahrzeugs geführten Abgasgeräuschen gemäß der Erfindung aufweist.

Im Folgenden werden unter Bezugnahme auf die Figuren mehrere Beispiele erläutert.

Wie aus Figuren 2A bis 2H ersichtlich, wird von einer Verbrennungskraftmaschine 150 erzeugtes Abgas 160 entlang einer Abgasleitung 110 einer Abgasanlage geführt und über eine Mündung 112 eines Endrohrs 113 an die Atmosphäre (Umgebung) ausgegeben. Die Strömungsrichtung des Abgases 160 ist durch einen Pfeil gekennzeichnet.

Optional kann die Abgasleitung 110 zwischen der Verbrennungskraftmaschine 150 und dem Endrohr 113 eine oder mehrere zusätzliche Komponenten wie beispielsweise einen Turbolader, einen Katalysator und/oder einen Schalldämpfer durchlaufen. Diese Komponenten sind nur in Figur 1B schematisch gezeigt. Weiter wird betont, dass mehr als ein Abgasstrang vorhanden sein kann.

Gemäß der Figuren 2A bis 2H weist die Abgasanlage zudem einen Schallerzeuger 121 mit einem gegen äußere Einflüsse abgekapselten und schallisolierten Gehäuse aus Metallblech auf, in welchem ein Lautsprecher 122 angeordnet ist. Der Schallerzeuger 121 weist eine Schallleitung 120 auf, über welche der im Schallerzeuger 121 erzeugte Schall in das Innere der Abgasleitung 110 eingekoppelt wird. Hierfür stehen die Schallleitung 120 und die Abgasleitung 110 miteinander in Fluidverbindung. Der Lautsprecher 122 ist elektrisch mit einer Steuerung 123 verbunden. Die Steuerung 123 gibt ein elektrisches Signal aus, welches von dem Lautsprecher 122 in Schall umgesetzt wird. Die Steuerung 123 ist über einen CAN-Bus elektrisch mit einer Motorsteuerung 151 der Verbrennungskraftmaschine 150 verbunden und empfängt von dieser Motorparameter, nämlich die jeweils aktuelle Drehzahl und das aktuelle Drehmoment. Diese Motorparameter werden von der Steuerung 123 bei der Erzeugung des elektrischen Signals berücksichtigt, so dass der von dem Lautsprecher 122 erzeugte Schall zu einem jeweiligen Betriebszustand der Verbrennungskraftmaschine 150 passt. Es wird betont, dass anstelle des CAN-Bus auch ein anderer Fahrzeugbus, insbesondere ein LIN-Bus, MOST-Bus oder Flexray-Bus verwendet werden kann. Weiter können andere und zusätzliche oder auch gar keine Motorparameter verwendet werden. Bei den in den Figuren 2A bis 2H gezeigten Beispielen ist ein Boden 124 der Schallleitung 120 tiefer als ein Boden 111 der Abgasleitung angeordnet, so dass sich Kondensat 141 am Boden 124 der Schallleitung 120 sammeln kann. Ein Boden des Schallerzeugers 121 ist zwar höher als ein Boden 124 der Schallleitung 120 angeordnet; jedoch ist zwischen einem tiefstliegenden Bodenabschnitt des Schallerzeugers 121 und der Schallleitung 120 ein höherliegender Bodenabschnitt angeordnet, so dass in dem Schallerzeuger 121 gebildetes Kondensat 140 nicht vollständig in die Schallleitung 120 abfließen kann, sondern sich am tiefstliegenden Bodenabschnitt des Schallerzeugers 121 sammelt.

Gemäß des Beispiels aus Figur 2A ist im Inneren der Schallleitung 120 eine Saugleitung 130 angeordnet. Die Saugleitung 130 besteht aus Kunststoff und ist mittels eines Abstandshalters 125 so gehaltert, dass sie axial mittig in der Schallleitung 120 angeordnet ist. Die Saugleitung 130 weist an ihren beiden Enden jeweils eine Öffnung auf. Eine Öffnung der Saugleitung 130 ist am Boden des Schallerzeugers 121 angeordnet und taucht in Kondensat 140 ein, welches sich am tiefstliegenden Boden des Schallerzeugers 121 gesammelt hat. Das andere Ende der Saugleitung 130 weist eine Mündung 135 auf, die axial mittig in der Abgasleitung 110 angeordnet und in Strömungsrichtung des Abgases 160 orientiert ist.

Die Anordnung der Saugleitung 130 axial mittig in der Abgasleitung führt zu einer Verkleinerung des freien Querschnitts der Abgasleitung 110. Es tritt ein Venturi-Effekt auf, bei welchem das in der Abgasleitung 110 geführte Abgas 160 stromaufwärts der Saugleitung 130 einen Staudruck und stromabwärts der Saugleitung 130 und damit im Bereich der Mündung 135 der Saugleitung einen Unterdruck erzeugt. Dieser Unterdruck saugt das im Schallerzeuger 121 gesammelte Kondensat 140 ab und gibt es in die Abgasleitung 110 aus.

Die Ausführungsform aus Figur 2B unterscheidet sich von der Figur 2A dadurch, dass die Saugleitung 130 nicht axial mittig in der Schallleitung 120 angeordnet ist, sondern sich an den Boden der Schallleitung 120 anschmiegt. In der gezeigten Ausführungsform ist die Saugleitung 130 kein von der Schallleitung 120 separates Element, sondern dadurch gebildet, dass mittels eines Blechs ein Segment der Schallleitung abgetrennt ist. Auf den Abstandshalter 125 kann daher verzichtet werden. Entsprechend ist auch die Mündung 135 der Saugleitung 130 nicht axial mittig in der Abgasleitung 110 angeordnet, sondern schmiegt sich an den Boden 111 der Abgasleitung 110 an. Weiter ist die Öffnung der Saugleitung 130 in der Ausführungsform der Figur 2B nicht am Boden des Schallerzeugers 121 sondern im Bereich des tiefstliegendsten Bodens 124 der Schallleitung 120 angeordnet und taucht in Kondensat 141 ein, welches sich am tiefstliegenden Boden 124 der Schallleitung 120 gesammelt hat.

Auch hier tritt infolge der Anordnung der Saugleitung 130 in der Abgasleitung 110 ein Venturi-Effekt auf, welcher das Kondensat 141 über die Saugleitung in die Abgasleitung 110 hinein absaugt.

Das Beispiel aus Figur 2C unterscheidet sich von den Figuren 2A und 2B dadurch, dass zwei Saugleitungen 130, 131 vorgesehen sind, von denen eine Saugleitung 131 Kondensat 140 am tiefstliegenden Boden des Schallerzeugers 121 und eine Saugleitung 130 Kondensat 141 am tiefstliegenden Boden 124 der Schallleitung 120 in die Abgasleitung 110 absaugt. Dabei können sich die Saugleitungen 130, 131 gegenseitig tragen, so dass auf den Abstandshalter 125 verzichtet werden kann.

Das Beispiel aus Figur 2D unterscheidet sich von der Figur 2C dadurch, dass anstelle von zwei separaten Saugleitungen 130, 131 eine einzige Saugleitung 132 vorgesehen ist, die zwei Saugöffnungen 133, 134 aufweist, von denen eine Saugöffnung 133 Kondensat 141 am tiefstliegenden Boden 124 der Schallleitung 120 und eine Saugöffnung 134 Kondensat 140 am tiefstliegenden Boden des Schallerzeugers 121 in die Abgasleitung 110 absaugt. Wie in der Figur 2A ist die Saugleitung 132 mittels eines Abstandshalters 125 coaxial mittig in der Schallleitung 120 gehaltert, und ist die Mündung 135 der Saugleitung 132 coaxial mittig in der Abgasleitung 110 angeordnet. Dabei ist die näher an der Mündung 135 angeordnete Saugöffnung 133 so ausgebildet, dass sie verglichen mit der entlang der Saugleitung 132 weiter von der Mündung 135 entfernt angeordneten Saugöffnung 134 nur den halben Querschnitt aufweist. Hierdurch wird in Abhängigkeit von dem jeweiligen Abstand der Saugöffnung 133, 134 von der Mündung 135 entlang der Saugleitung 132 erreicht, dass die Saugöffnungen 133, 134 dem erzeugten Unterdruck in etwa den selben Wiederstand entgegenstellen und so gleichmäßig mit Unterdruck beaufschlagt werden.

Das Beispiel aus Figur 2E unterscheidet sich von der Figur 2B dadurch, dass die Mündung 135 der Saugleitung 136 bündig mit einem Boden 111 der Abgasleitung 110 abschließt, und die Saugleitung 136 somit nicht in die Abgasleitung 110 hineinragt. Dafür weist die Abgasleitung 110 im Bereich der Mündung 135 der Saugleitung 136 eine Querschnittsveränderung 114 auf, die eine Venturi-Düse bildet.

Das Beispiel aus Figur 2F unterscheidet sich von den Figuren 2A bis 2D zum einen dadurch, dass die Mündung 135 der Saugleitung 137 bündig mit einem Boden 111 der Abgasleitung 110 abschließt, und nur von dem in der Abgasleitung 110 geführten Abgas 160 überströmt wird. Die Saugleitung 137 ragt somit nicht in die Abgasleitung 110 hinein. Weiter ist die Saugleitung 137 nicht innerhalb der Schallleitung 120 geführt, sondern durchdringt sowohl eine Wand der Schallleitung 120 als auch eine Wand der Abgasleitung 110. In diesem Beispiel ist die Saugleitung 137 aus Edelstahl gebildet.

Die Beispiele aus Figur 2G und 2H unterscheiden sich von der Figur 2F dadurch, dass im Bereich der Mündung 135 der jeweiligen Saugleitung 137, 138 in der Abgasleitung 110 jeweils Maßnahmen getroffen wurden, um den Querschnitt der Abgasleitung 110 zu verringern und so eine Venturi-Anordnung 114 zu bilden.

Gemäß des Beispiels der Figur 2G wird diese Verringerung des Querschnitts durch Verkleinerung des Durchmessers der Abgasleitung 110 insgesamt erreicht.

Gemäß des Beispiels der Figur 2H wird diese Verringerung des Querschnitts dadurch erreicht, dass die Abgasleitung 110 bei grundsätzlich konstantem Innendurchmesser Einbauten enthält, die den für das Abgas 160 durchströmbaren Querschnitt verkleinern.

In der Figur 3 ist schematisch ein Kraftfahrzeug gezeigt, welches neben einer Verbrennungskraftmaschine 150 die vorstehend beschriebene Abgasanlage mit einem System zur Abfuhr von Kondensat aufweist. Von diesem System sind in Figur 3 allerdings nur ein Abschnitt der Abgasleitung 110 sowie das Endrohr 113 mit der Mündung 112 der Abgasleitung 110 sowie ein Abschnitt der Schallleitung 120 gezeigt.

## Patentansprüche

1. Abgasanlage für ein verbrennungsmotorisch betriebenes Fahrzeug mit einem System zur Abfuhr von Kondensat (140; 141), aufweisend:
einen ersten mit Abgas (160) beaufschlagbaren Leitungsabschnitt (110), wobei der erste Leitungsabschnitt (110) ein Ende aufweist, das mit einer Verbrennungskraftmaschine (150) in Fluidverbindung bringbar ist, und ein Ende aufweist, das mit einer Abgasmündung (112) in Fluidverbindung bringbar ist, und so eine Abgasleitung bildet;
einen zweiten mit Abgas (160) beaufschlagbaren Leitungsabschnitt (120), wobei der zweite Leitungsabschnitt (120) nur aus einem Schallerzeuger (121) mit einer Schallleitung gebildet ist, wobei der Schallerzeuger (121) zum Empfang von Steuersignalen mit einer Steuerung (123) verbunden und zum Erzeugen von Schall in dem zweiten Leitungsabschnitt (120) ausgebildet ist, wobei die Schallleitung des zweiten Leitungsabschnitts (120) in den ersten Leitungsabschnitt (110) mündet; und
eine Saugleitung (130);
wobei die Saugleitung (130) genau zwei sich in Längserstreckung der Saugleitung (130) gegenüberliegende Öffnungen aufweist, wobei eine erste Öffnung der Saugleitung (130) im ersten Leitungsabschnitt (110) angeordnet ist, um von Abgas überströmt zu werden, und eine zweite Öffnung der Saugleitung (130) am Boden der Schallleitung des zweiten Leitungsabschnitts (120) angeordnet ist, wobei die Saugleitung (130) zwischen dem Boden (124) der Schallleitung des zweiten Leitungsabschnitts (120) und dem ersten Leitungsabschnitt (110) angeordnet ist, und die erste Öffnung (135) der Saugleitung ausgebildet ist, von in dem ersten Leitungsabschnitt (110) strömendem Abgas (160) überströmt zu werden,
wobei der Schallerzeuger (121) einen Boden aufweist,
wobei der Boden (124) der Schallleitung und der Boden des Schallerzeugers (121) des zweiten Leitungsabschnitts (120) unterhalb eines Bodens (111) des ersten Leitungsabschnitts (110) angeordnet sind; und
wobei der zweite Leitungsabschnitt (120) ein konstantes Volumen begrenzt;
**dadurch gekennzeichnet, dass**
die Saugleitung (130) ein mittels eines Blechs von der Schallleitung des zweiten Leitungsabschnitts (120) abgetrenntes Segment ist und sich an den Boden der Schallleitung des zweiten Leitungsabschnitts (120) anschmiegt, so dass sich die erste Öffnung (135) der Saugleitung (130) an den Boden (111) der von dem ersten Leitungsabschnitt (110) gebildeten Abgasleitung anschmiegt und die zweite Öffnung der Saugleitung (130) nicht am Boden des Schallerzeugers (121) sondern im Bereich des tiefliegendsten Bodens (124) der Schallleitung (120) angeordnet ist.

2. Abgasanlage nach Anspruch 1,
wobei der erste Leitungsabschnitt (110) an der Stelle, an welcher die Saugleitung (130) in den ersten Leitungsabschnitt (110) mündet, einen Querschnitt aufweist, der gegenüber einem Querschnitt stromaufwärts der Stelle, an welcher die Saugleitung (130) in den ersten Leitungsabschnitt (110) mündet, verkleinert ist; und/oder
wobei der erste Leitungsabschnitt (110) an der Stelle, an welcher die Saugleitung (130) in den ersten Leitungsabschnitt (110) mündet, einen größten Durchmesser aufweist, der gegenüber einem größten Durchmesser stromaufwärts der Stelle, an welcher die Saugleitung (130) in den ersten Leitungsabschnitt (110) mündet, verkleinert ist.

3. Abgasanlage nach Anspruch 2,
wobei der Querschnitt des ersten Leitungsabschnitts (110) an der Stelle, an welcher die Saugleitung (130) in den ersten Leitungsabschnitt (110) mündet, um wenigstens 5 % und insbesondere wenigstens 10 % und weiter insbesondere um wenigstens 20 % gegenüber dem Querschnitt stromaufwärts der Stelle, an welcher die Saugleitung (130) in den ersten Leitungsabschnitt (110) mündet, verkleinert ist; und/oder
wobei der größte Durchmesser des ersten Leitungsabschnitts (110) an der Stelle, an welcher die Saugleitung (130) in den ersten Leitungsabschnitt (110) mündet, um wenigstens 3 % und insbesondere wenigstens 7 % und weiter insbesondere um wenigstens 14 % gegenüber dem größten Durchmesser stromaufwärts der Stelle, an welcher die Saugleitung (130) in den ersten Leitungsabschnitt (110) mündet, verkleinert ist.

4. Abgasanlage nach Anspruch 2 oder 3,
wobei die Stelle, an welcher die Saugleitung (130) in den ersten Leitungsabschnitt (110) mündet, um höchstens das zweifache der Wurzel aus der Querschnittsfläche und insbesondere um die Wurzel aus der Querschnittsfläche und weiter insbesondere um höchstens die halbe Wurzel aus der Querschnittsfläche des ersten Leitungsabschnitts (110) an der Stelle, an welcher die Saugleitung (130) in den ersten Leitungsabschnitt (110) mündet, entgegen der Strömungsrichtung des Abgases von der Stelle des ersten Leitungsabschnitts (110) beabstandet ist, an welcher der erste Leitungsabschnitt (110) einen größeren Querschnitt als an der Stelle aufweist, an welcher die Saugleitung (130) in den ersten Leitungsabschnitt (110) mündet; und/oder
wobei die Stelle, an welcher die Saugleitung (130) in den ersten Leitungsabschnitt (110) mündet, um höchstens den dreifachen größten Durchmesser und insbesondere um höchstens den 1,5-fachen größten Durchmesser und weiter insbesondere um höchstens den 0,75-fachen größten Durchmesser des ersten Leitungsabschnitts (110) an der Stelle, an welcher die Saugleitung (130) in den ersten Leitungsabschnitt (110) mündet, entgegen der Strömungsrichtung des Abgases von der Stelle des ersten Leitungsabschnitts (110) beabstandet ist, an welcher der erste Leitungsabschnitt (110) einen größeren Querschnitt als an der Stelle aufweist, an welcher die Saugleitung (130) in den ersten Leitungsabschnitt (110) mündet.

5. Abgasanlage nach einem der Ansprüche 1 bis 4,
wobei die Saugleitung (130) einen Querschnitt aufweist, der höchstens 50 % des Querschnitts und insbesondere höchstens 30 % des Querschnitts und weiter insbesondere höchstens 10 % des Querschnitts des ersten und/oder zweiten Leitungsabschnitts (110, 120) beträgt; und/oder
wobei die Saugleitung (130) einen größten Durchmesser aufweist, der höchstens 33 % des Durchmessers und insbesondere höchstens 20 % des größten Durchmessers und weiter insbesondere höchstens 7 % des größten Durchmessers des ersten und/oder zweiten Leitungsabschnitts (110, 120) beträgt.

6. Kraftfahrzeug aufweisend:
eine Verbrennungskraftmaschine (150) mit einer Motorsteuerung; und
eine Abgasanlage nach einem der Ansprüche 1 bis 5,
wobei ein Ende des ersten Leitungsabschnitt (110) mit der Verbrennungskraftmaschine (150) in Fluidverbindung steht, und das andere Ende des ersten Leitungsabschnitts (110) mit einer Abgasmündung (114) in Fluidverbindung steht; und
wobei bei Betrieb der Verbrennungskraftmaschine (150) ein von dem Abgas (160) der Verbrennungskraftmaschine (150) hervorgerufener Innendruck in dem ersten Leitungsabschnitt (110) an der Stelle, an welcher die Saugleitung (130) in den ersten Leitungsabschnitt (110) mündet, gegenüber einem Innendruck stromaufwärts der Stelle, an welcher die Saugleitung (130) in den ersten Leitungsabschnitt (110) mündet, verkleinert ist.

## Claims

1. Exhaust system for a vehicle driven by an internal combustion engine and having a system for removing condensate (140; 141), comprising:
a first line section (110) placeable under exhaust gas (160), wherein the first line section (110) has one end adapted for a fluid connection with an internal combustion engine (150), and one end adapted for a fluid connection with an exhaust gas discharge opening (112), thus, establishing an exhaust gas line;
a second line section (120) placeable under exhaust gas (160), wherein the second line section (120) is constituted by a sound generator (121) having a sound line, only, wherein the sound generator (121) is coupled to a controller (123) for receiving control signals, and configured to generate sound in the second line section (120), wherein the sound line of the second line section (120) converges into the first line section (110); and
a suction line (130);
wherein the suction line (130) comprises exactly two openings located opposite to each other with respect to the longitudinal extension of the suction line (130), wherein a first opening of the suction line (130) is located within the first line section (110) to have exhaust gas flowing over it, and a second opening of the suction line (130) is located at the bottom of the second line section (120), wherein the suction line (130) is disposed between the bottom (124) of the sound line of the second line section (120) and the first line section (110), and the first opening (135) of the suction line is configured for exhaust gas (160) passing in the first line section (110) to flow over it;
wherein the sound generator (121) has a bottom,
wherein the bottom (124) of the sound line and the bottom of the sound generator (121) of the second line section (120) are disposed below a bottom (111) of the first line section (110); and
wherein the second line section (120) defines a constant volume;
**characterized in that**
the suction line (130) is formed by separating a segment from the sound line of the second line section (120) using a metal sheet, and is positioned in contact with the bottom of the sound line of the second line section (120), such that the first opening (135) of the suction line (130) is positioned at the bottom (111) of the exhaust gas line established by the first line section (110), and the second opening of the suction line (130) is not disposed at the bottom of the sound generator (121), but in the region of the lowest level bottom (124) of the sound line (120).

2. Exhaust system according to claim 1,
wherein the first line section (110) has, at the position where the suction line (130) enters the first line section (110), a cross-section that is reduced with respect to a cross-section upstream of the position where the suction line (130) enters the first line section (110); and/or
wherein the first line section (110) has, at the position where the suction line (130) enters the first line section (110), a largest diameter that is reduced with respect to a largest diameter upstream of the position where the suction line (130) enters the first line section (110).

3. Exhaust system according to claim 2,
wherein the cross-section of the first line section (110) is, at the position where the suction line (130) enters the first line section (110), reduced with respect to the cross-section upstream of the position where the suction line (130) enters the first line section by at least 5 %, and in particular at least 10 %, and further in particular by at least 20 %; and/or
wherein the largest diameter of the first line section (110) is, at the position where the suction line (130) enters the first line section (110), reduced with respect to the largest diameter upstream of the position where the suction line (130) enters the first line section (110) by at least 3 %, and in particular at least 7%, and further in particular by at least 14 %.

4. Exhaust system according to claim 2 or 3,
wherein the position, where the suction line (130) enters the first line section (110) is against the flow direction of the exhaust gas spaced apart from the position of the first line section (110) where the first line section (110) has a larger cross-section than at the position where the suction line (130) enters the first line section (110) by not more than two times the square-root of the cross-sectional area, and in particular by the square-root of the cross-sectional area, and further in particular by not more than half of the square-root of the cross-sectional area of the first line section (110) at the position where the suction line (130) enters the first line section (110); and/or
wherein the position, where the suction line (130) enters the first line section (110) is against the flow direction of the exhaust gas spaced apart from the position of the first line section (110) where the first line section (110) has a larger cross-section than at the position where the suction line (130) enters the first line section (110) by not more than three times the largest diameter, and in particular by not more than one and a half times the largest diameter, and further in particular not more than three quarter of the largest diameter of the first line section (110) at the position, where the suction line (130) enters the first line section (110).

5. Exhaust system according to one of claims 1 to 4,
wherein the suction line (130) has a cross-section being not more than 50 % of the cross-section, and in particular not more than 30 % of the cross-section, and further in particular not more than 10 % of the cross-section of the first and/or second line section (110; 120); and/or
wherein the suction line (130) has a largest diameter being not more than 33 % of the largest diameter, and in particular not more than 20 % of the largest diameter, and further in particular not more than 7 % of the largest diameter of the first and/or second line section (110; 120).

6. Motor vehicle comprising:
an internal combustion engine (150) having an engine control unit; and
an exhaust system according to one of claims 1 to 5,
wherein one end of the first line section (110) is in fluid communication with the internal combustion engine (150), and the other end of the first line section (110) is in fluid communication with an exhaust gas discharge opening (114); and
wherein, during operation of the internal combustion engine (150), an internal pressure caused by the exhaust gas (160) from the internal combustion engine (150) inside the first line section (110) at the position, where the suction line (130) enters the first line section (110), is reduced with respect to an internal pressure upstream of the position, where the suction line (130) enters the first line section (110).

## Revendications

1. Système d'échappement pour un véhicule fonctionnant avec un moteur à combustion interne, comprenant un système pour évacuer le condensat (140; 141), présentant :
un premier tronçon de conduit (110) pouvant être soumis à l'action de gaz d'échappement (160), dans lequel le premier tronçon de conduit (110) présente une extrémité qui peut être mise en communication de fluide avec un moteur à combustion interne (150), et une extrémité qui peut être mise en communication de fluide avec une sortie de gaz d'échappement (112), et forme ainsi un conduit de gaz d'échappement;
un deuxième tronçon de conduit (120) pouvant être soumis à l'action de gaz d'échappement (160), dans lequel le deuxième tronçon de conduit (120) n'est formé que d'un générateur acoustique (121) avec un conduit acoustique, et dans lequel le générateur acoustique (121) est relié à une commande (123) afin de recevoir des signaux de commande et est réalisé afin de produire des bruits dans le deuxième tronçon de conduit (120), dans lequel le conduit acoustique du deuxième tronçon de conduit (120) débouche dans le premier tronçon de conduit (110); et
un conduit d'aspiration (130);
dans lequel le conduit d'aspiration (130) présente exactement deux ouvertures opposées dans l'extension longitudinale du conduit d'aspiration (130), dans lequel une première ouverture du conduit d'aspiration (130) est disposée dans le premier tronçon de conduit (110) afin d'être submergée par des gaz d'échappement, et une deuxième ouverture du conduit d'aspiration (130) est disposée au fond du conduit acoustique du deuxième tronçon de conduit (120), dans lequel le conduit d'aspiration (130) est disposé entre le fond (124) du conduit acoustique du deuxième tronçon de conduit (120) et le premier tronçon de conduit (110), et la première ouverture (135) du conduit d'aspiration est réalisée pour être submergée par des gaz d'échappement (160) s'écoulant dans le premier tronçon de conduit (110),
dans lequel le générateur acoustique (121) présente un fond,
dans lequel le fond (124) du conduit acoustique et le fond du générateur acoustique (121) du deuxième tronçon de conduit (120) sont disposés au-dessous d'un fond (111) du premier tronçon de conduit (110); et
dans lequel le deuxième tronçon de conduit (120) délimite un volume constant;
**caractérisé en ce que**
le conduit d'aspiration (130) est un segment séparé du conduit acoustique du deuxième tronçon de conduit (120) à l'aide d'une tôle et épouse la forme du fond du conduit acoustique du deuxième tronçon de conduit (120), de sorte que la première ouverture (135) du conduit d'aspiration (130) épouse la forme du fond (111) du conduit de gaz d'échappement formé par le premier tronçon de conduit (110) et que la deuxième ouverture du conduit d'aspiration (130) est disposée non pas au fond du générateur acoustique (121), mais dans la zone du fond le plus bas (124) du conduit acoustique (120).

2. Système d'échappement selon la revendication 1,
dans lequel le premier tronçon de conduit (110) présente à l'emplacement, au niveau duquel le conduit d'aspiration (130) débouche dans le premier tronçon de conduit (110), une section transversale, qui est réduite par rapport à une section transversale en amont de l'emplacement, au niveau duquel le conduit d'aspiration (130) débouche dans le premier tronçon de conduit (110); et/ou dans lequel le premier tronçon de conduit (110) présente à l'emplacement, au niveau duquel le conduit d'aspiration (130) débouche dans le premier tronçon de conduit (110), un diamètre plus grand, qui est réduit par rapport à un diamètre plus grand en amont de l'emplacement, au niveau duquel le conduit d'aspiration (130) débouche dans le premier tronçon de conduit (110).

3. Système d'échappement selon la revendication 2,
dans lequel la section transversale du premier tronçon de conduit (110) est réduite à l'emplacement, au niveau duquel le conduit d'aspiration (130) débouche dans le premier tronçon de conduit (110), d'au moins 5 % et en particulier d'au moins 10 % et par ailleurs en particulier d'au moins 20 % par rapport à la section transversale en amont de l'emplacement, au niveau duquel le conduit d'aspiration (130) débouche dans le premier tronçon de conduit (110); et/ou
dans lequel le plus grand diamètre du premier tronçon de conduit (110) est réduit à l'emplacement, au niveau duquel le conduit d'aspiration (130) débouche dans le premier tronçon de conduit (110), d'au moins 3 % et en particulier d'au moins 7 % et par ailleurs en particulier d'au moins 14 % par rapport au plus grand diamètre en amont de l'emplacement, au niveau duquel le conduit d'aspiration (130) débouche dans le premier tronçon de conduit (110).

4. Système d'échappement selon la revendication 2 ou 3,
dans lequel l'emplacement au niveau duquel le conduit d'aspiration (130) débouche dans le premier tronçon de conduit (110) est espacé, d'une valeur maximale égale au double de la racine de la surface de section de transversale, et en particulier d'une valeur égale à la racine de la surface de section transversale, et par ailleurs en particulier d'une valeur maximale égale à la moitié de la racine de la surface de section transversale du premier tronçon de conduit (110) à l'emplacement, au niveau duquel le conduit d'aspiration (130) débouche dans le premier tronçon de conduit (110), dans le sens opposé à la direction d'écoulement des gaz d'échappement, de l'emplacement du premier tronçon de conduit (110), au niveau duquel le premier tronçon de conduit (110) présente une section transversale plus grande qu'à l'emplacement, au niveau duquel le conduit d'aspiration (130) débouche dans le premier tronçon de conduit (110) ; et/ou
dans lequel l'emplacement au niveau duquel le conduit d'aspiration (130) débouche dans le premier tronçon de conduit (110) est espacé, d'une valeur maximale égale au triple du plus grand diamètre, et en particulier d'une valeur égale à 1,5 fois le plus grand diamètre, et par ailleurs en particulier d'une valeur maximale égale à 0,75 fois le plus grand diamètre du premier tronçon de conduit (110) à l'emplacement, au niveau duquel le conduit d'aspiration (130) débouche dans le premier tronçon de conduit (110), dans le sens opposé à la direction d'écoulement des gaz d'échappement, de l'emplacement du premier tronçon de conduit (110), au niveau duquel le premier tronçon de conduit (110) présente une section transversale plus grande qu'au niveau de l'emplacement, au niveau duquel le conduit d'aspiration (130) débouche dans le premier tronçon de conduit (110).

5. Système d'échappement selon l'une quelconque des revendications 1 à 4,
dans lequel le conduit d'aspiration (130) présente une section transversale, qui vaut au maximum 50 % de la section transversale et en particulier au maximum 30 % de la section transversale et par ailleurs en particulier au maximum 10 % de la section transversale du premier et/ou du deuxième tronçon de conduit (110, 120); et/ou
dans lequel le conduit d'aspiration (130) présente un diamètre plus grand qui vaut au maximum 33 % du diamètre et en particulier au maximum 20 % du diamètre plus grand, et par ailleurs en particulier au maximum 7 % du diamètre plus grand du premier et/ou du deuxième tronçon de conduit (110, 120).

6. Véhicule automobile présentant :
un moteur à combustion interne (150) pourvu d'une commande de moteur; et
un système d'échappement selon l'une quelconque des revendications 1 à 5,
dans lequel une extrémité du premier tronçon de conduit (110) se trouve en communication fluidique avec le moteur à combustion interne (150) et l'autre extrémité du premier tronçon de conduit (110) se trouve en communication fluidique avec une embouchure de gaz d'échappement (114); et
dans lequel, lors du fonctionnement du moteur à combustion interne (150), une pression intérieure produite par les gaz d'échappement (160) du moteur à combustion interne (150) est réduite dans le premier tronçon de conduit (110) à l'emplacement, au niveau duquel le conduit d'aspiration (130) débouche dans le premier tronçon de conduit (110), par rapport à une pression intérieure en amont de l'emplacement, au niveau duquel le conduit d'aspiration (130) débouche dans le premier tronçon de conduit (110).
